# FASCICULE DE BREVET EUROPEEN

(11) **EP 1 855 965 B1**
(45) Date de publication et mention de la délivrance du brevet: **01.10.2008**
(21) Numéro de dépôt: 06726021.6
(22) Date de dépôt: 06.03.2006
(51) Int. Cl.: B65G 21/06

(54) **DISPOSITIF CONVOYEUR À TAPIS DU TYPE À CHAÎNE SANS FIN À PALETTES, POUR LE TRANSPORT DE CAISSES DE BOUTEILLES**
GLIEDERBAND-KETTENARTIGE ENDLOSBANDFÖRDERVORRICHTUNG FÜR DEN TRANSPORT VON FLASCHENKÄSTEN
ENDLESS SLAT-BAND-CHAIN-TYPE BELT CONVEYOR DEVICE FOR THE TRANSPORT OF BOTTLE CRATES

(30) Priorité: 07.03.2005 FR 0502260; 08.07.2005 FR 0507273
(43) Date de publication de la demande: 21.11.2007
(73) Titulaire: SIDEL PARTICIPATIONS, 76930 Octeville-sur-Mer (FR)
(72) Inventeur: PETROVIC, Zmaj, F-76930 Octeville Sur Mer (FR)
(74) Mandataire: Cabinet Plasseraud
(86) Numéro de dépôt international: PCT/FR2006/000484
(87) Numéro de publication internationale: WO 2006/095078

(56) Documents cités:
- EP-A- 0 122 573
- EP-A- 0 492 058
- US-A- 3 292 772
- US-A1- 2004 026 219
- US-B1- 6 170 645

## Description

La présente invention concerne un dispositif convoyeur à tapis du type à chaîne sans fin à palettes, pour le transport de caisses de bouteilles notamment.

Un convoyeur de ce type, à tapis sans fin à palettes, pour le transport de bouteilles, est décrit dans le document US 3 292 772. Ce convoyeur comprend une structure centrale à section en C qui est complétée, à chaque extrémité, par des supports munis des poulies d'enroulement et d'entraînement du tapis. Cet entraînement est réalisé par une chaîne sans fin et par une motorisation installée sur la structure centrale.

Le matériel selon l'invention apporte des améliorations sur plusieurs plans, notamment pour le transport de caisses de bouteilles par convoyeur.

La structure originale du dispositif convoyeur, selon l'invention, offre un aspect peu commun pour ce type de matériel, fait d'une grande finesse et d'une apparente légèreté, et il est bien adapté au transport de caisses de bouteilles.

Sa conception permet aussi un montage rapide et simple in situ, même dans des endroits difficiles d'accès et étriqués ; cette conception offre la possibilité de disposer d'un matériel qui, en grande partie, peut être pré-assemblé, lequel matériel est constitué de modules faciles à déplacer et à assembler.

Cette structure originale du dispositif convoyeur selon l'invention, permet aussi d'améliorer un autre aspect du matériel qui prend de plus en plus d'importance : l'environnement sonore.

Indépendamment du bruit causé par les bouteilles ou les caisses de bouteilles, ce type de dispositif convoyeur à tapis constitué de palettes métalliques, comme décrit dans le document précité, est une source de bruit très importante dont l'origine provient du tapis lui-même.

Le dispositif convoyeur selon l'invention apporte une nette amélioration environnementale sur le plan de l'ambiance sonore par un guidage approprié du tapis, lequel guidage offre la possibilité de maintenir, de façon automatique, une certaine tension sur le tapis, ce qui a pour effet de supprimer les vibrations et chocs et, par voie de conséquence, les bruits dont ils sont la cause.

Par rapport au convoyeur décrit dans le document précité, il apporte d'autres améliorations, toujours grâce à sa structure : - sur le plan de la sécurité pour le personnel qui est amené à circuler autour et le long du dispositif convoyeur et - sur le plan de la tenue dans le temps du tapis face aux problèmes liés à son encrassement, lequel tapis et ses accessoires, comme les arbres et poulies d'entraînement, restent propres malgré la présence de débris et de déchets qui peuvent être véhiculés par les caisses posées sur son brin supérieur.

Le dispositif convoyeur selon l'invention, du type à chaîne sans fin à palettes, pour le transport de caisses de bouteilles, comprend:
- au moins un module basique constitué d'une structure centrale qui comprend des flancs à section en C disposés de façon à placer leurs replis en vis-à-vis, lesquels flancs sont assemblés par des traverses et ils sont aménagés pour porter et guider le brin supérieur et le brin inférieur du tapis, laquelle structure centrale a une largeur qui correspond à celle dudit tapis et elle forme une sorte de caisson fermé, délimité par lesdits flancs et par lesdits brins inférieur et supérieur dudit tapis ;
- des modules d'extrémité aménagés en forme de caisson également avec des parois longitudinales à section en forme de L renversé, lesquelles parois accueillent et portent chacune, avec des moyens appropriés, l'extrémité d'un module basique adjacent, et servent de guides, d'une part, pour ledit brin supérieur du tapis sur l'aile horizontale dudit L et, d'autre part, pour ledit brin inférieur entre les ailes verticales dudit L, lesquels modules d'extrémité comportent chacun une poulie d'enroulement dudit tapis et, selon le cas, la motorisation de ladite poulie pour entraîner ledit tapis.

Dans le cas particulier d'un module basique pour tronçon de convoyeur en pente, pour des montées ou des descentes de caisses de bouteilles, le tapis est porté au niveau de ses brins supérieur et inférieur par les replis des flancs et il comporte, de façon classique, sous la face porteuse des palettes, des guides en forme de crochets qui coopèrent avec lesdits replis pour éviter le bâillement dudit tapis par rapport aux surfaces de guidage.

Toujours selon l'invention, dans le cas de tronçons en pente, le module basique est constitué d'un module rectiligne et de deux modules arqués qui sont disposés à chaque extrémité dudit module rectiligne, lesquels modules arqués sont en forme d'arcs de cercle : l'un est convexe, l'autre est concave, pour permettre une jonction tangentielle entre ledit module rectiligne et chaque module d'extrémité, de façon à améliorer le guidage des caisses de bouteilles et surtout de façon à éviter leur impact sur le tapis aval de l'angle fermé dans le bas de la pente.

Selon une disposition préférentielle de l'invention, chaque module arqué est constitué de flancs à section en C, dont la partie servant de guide au tapis est façonnée dans un bloc en matériau thermoplastique, lequel bloc est associé et fixé à une plaque métallique externe qui réalise la continuité et la jonction entre les différents modules, c'est-à-dire entre le module rectiligne et le module d'extrémité adjacent ; le rayon de courbure et la longueur du module arqué sont choisis pour donner une pente au module rectiligne, de l'ordre de 20 à 22 %.

En fonction des besoins, le dispositif convoyeur selon l'invention comprend un module intermédiaire qui correspond sensiblement à l'assemblage de deux modules d'extrémité disposés dos à dos, lequel module intermédiaire s'interpose entre les extrémités de deux modules basiques adjacents, un module basique aval et un module basique amont, lequel module intermédiaire comporte notamment : - des moyens pour accueillir et porter lesdites extrémités de ces derniers, - des parois longitudinales dont la section est en forme de L renversé, disposées dans le prolongement des flancs desdits modules basiques, - des poulies d'enroulement des tapis de chaque module basique adjacent dont l'une est motrice et l'autre libre, - des moyens de convoyage auxiliaires du genre tapis sans fin à chaîne ou autres, en forme de chenillettes, qui assurent la continuité du convoyage entre lesdits tapis desdits modules basiques, lesquels moyens de convoyage auxiliaires sont entraînés par le tapis dudit module basique adjacent, grâce à leurs propres poulies d'enroulement qui sont solidaires de ladite poulie libre servant à l'enroulement dudit tapis aval.

Toujours selon l'invention, les traverses d'assemblage des flancs à section en C sont constituées : - d'entretoises qui sont disposées entre lesdits flancs et - d'organes multifonctions qui forment des embouts et elles permettent, d'une part, l'assemblage desdits flancs au moyen desdites entretoises et, d'autre part, l'ancrage de chandelles, lesquelles chandelles servent de supports pour des rails latéraux de guidage des caisses, lesquels embouts ont une longueur adaptée pour établir, en fonction de la largeur du tapis, la largeur du couloir qui est délimité par lesdits rails de guidage, lesquelles entretoises sont disposées par paires dans un plan perpendiculaire aux brins supérieur et inférieur dudit tapis.

Selon une autre disposition de l'invention, les replis inférieurs et supérieurs des flancs des modules basiques, aussi bien pour les modules horizontaux que pour les modules rectilignes en pente, sont garnis de patins qui font office de surfaces de portage et de guidage pour les brins supérieur inférieur du tapis, respectivement, lesquels patins ont une section en U dont les rebords se resserrent en allant vers l'ouverture dudit U, pour permettre leur fixation par pincement sur lesdits replis.

Dans le cas des modules basiques horizontaux, les patins supérieurs assurent un guidage longitudinal du brin supérieur du tapis dans sa partie centrale, par l'intermédiaire des moyeux d'articulation des palettes dudit tapis, alors que les patins inférieurs assurent un guidage longitudinal du brin inférieur dudit tapis, par l'intermédiaire des extrémités latérales desdites palettes.

Dans le cas des modules basiques rectilignes en pente, les patins supérieurs assurent le guidage longitudinal du brin supérieur du tapis qui repose sur lesdits patins alors que les patins inférieurs assurent le guidage longitudinal du brin inférieur dudit tapis par l'intermédiaire des crochets de ce dernier.

Toujours selon l'invention, le module d'extrémité est constitué d'un cadre dont la largeur correspond sensiblement à celle du couloir de convoyage, lequel cadre est délimité par des flancs et traverses et il comporte, dans sa partie centrale, les deux parois longitudinales dont l'écartement correspond à celui des flancs du module basique adjacent, lesquelles parois sont munies, sur leur replis supérieur, de patins du même type que ceux installés sur lesdits flancs dudit module basique, et elles sont traversées par un arbre qui porte la poulie d'enroulement du tapis, lequel arbre s'étend entre des paliers disposés sur les flancs dudit cadre.

Dans le cas du module d'extrémité muni de la poulie motrice d'enroulement du tapis, les patins disposés sur les replis supérieurs des parois s'étendent sur une partie seulement de la longueur desdits replis auxquels ils sont associés, sur la partie aval de ces replis, de façon à permettre l'installation des patins supérieurs du module basique sur la partie libre desdits replis du module d'extrémité, laquelle partie libre a une longueur de l'ordre de la largeur du tapis, par exemple, et lesdits patins supérieurs dudit module d'extrémité se terminent en biais, en forme de flèche, pour libérer progressivement le tapis qui est pris en charge par ladite poulie motrice.

Selon une autre disposition de l'invention, les patins du module d'extrémité pour lequel la poulie est libre, non motorisée, s'étendent au-delà du cadre dudit module sur une longueur qui est, par exemple, de l'ordre de la largeur du tapis, de façon à permettre l'emboîtage desdits patins supérieurs du module d'extrémité sur les replis supérieurs des flancs du module basique adjacent.

Toujours selon l'invention, le module intermédiaire est constitué d'un grand cadre rectangulaire dont la largeur correspond à celle du couloir de guidage des caisses, lequel cadre comprend des flancs et des traverses, et il s'apparente à la réunion de deux cadres des modules d'extrémité placés dos à dos, pour réaliser la jonction entre les extrémités de deux modules basiques, lesquelles traverses desdits cadres supportent deux parois longitudinales et verticales dont l'écartement correspond à celui des flancs desdits modules basiques pour prolonger ces derniers, lesquelles parois longitudinales comportent des replis supérieurs identiques à ceux des parois des modules d'extrémité et à ceux des flancs des modules basiques, lesquels replis comportent des patins qui sont aménagés pour permettre une jonction mâle-femelle entre les différents modules, c'est-à-dire que, du côté de la poulie motrice, les patins sont plus courts que les replis sur lesquels ils sont fixés pour permettre une installation des patins du module basique adjacent sur ces derniers replis, alors que du côté de la poulie libre, les patins débordent du cadre dudit module intermédiaire et s'emboîtent sur les replis supérieurs de l'autre module basique adjacent, sur une longueur qui, dans les deux cas, est de l'ordre de la largeur du tapis.

Selon une autre disposition de l'invention, la partie centrale du module intermédiaire, située entre les poulies d'enroulement des tapis des modules basiques et les tapis auxiliaires de jonction disposés latéralement, est de dimension suffisante pour loger des accessoires comme, par exemple, un stoppeur qui permet d'immobiliser les caisses, lequel stoppeur est constitué d'une butée qui est articulée sur un bâti en forme de chape, lequel bâti comporte un ancrage pour le vérin de manoeuvre de ladite butée et il est muni de moyens pour être fixé dans l'espace central dudit module, sur une traverse, par exemple.

Toujours selon l'invention, les moyens de raccordement des rails de guidage sont constitués d'éclisses dont la section est en forme de U pour épouser extérieurement lesdits rails ; chaque éclisse est associée à une cale qui s'étend sur la moitié de la longueur de la surface interne du fond dudit U, laquelle cale permet de réaliser un décalage latéral du rail aval par rapport au rail amont pour éviter toute aspérité, ladite cale étant de préférence constituée d'un repli disposé dans ledit U, lequel repli est constitué d'une languette aménagée dans le prolongement de la seule face interne dudit U, repliée sur ladite face interne, faisant ainsi partie intégrante de ladite éclisse.

Selon une autre disposition de l'invention, un chemin de câbles est aménagé le long du convoyeur, porté par des équerres qui sont disposées et fixées, comme les chandelles, sur les embouts d'assemblage des entretoises du caisson central.

Mais l'invention sera encore détaillée à l'aide de la description suivante et des dessins annexés, donnés à titre illustratif, et dans lesquels :
- la figure 1 est une vue schématique d'un dispositif convoyeur utilisant des modules selon l'invention ;
- la figure 2 montre, d'une façon plus détaillée et en perspective, la structure d'une portion d'un module basique ;
- la figure 3 montre, de façon partielle, les différents éléments qui permettent l'assemblage des flancs constituant la structure du module basique et la fixation des rails de guidage des caisses ;
- la figure 4 montre les moyens de raccordement des extrémités de deux rails servant au guidage latéral des caisses ;
- la figure 5 est une vue de côté partielle d'un module basique, avec son piètement et avec un chemin de câble ;
- la figure 6 est une vue selon 6 - 6 de la figure 5 ;
- la figure 7 représente, d'une façon plus détaillée, un module d'extrémité du type module aval, comportant une poulie d'enroulement motorisée pour l'entraînement du tapis ;.
- la figure 8 représente également un module d'extrémité, mais du type amont, avec une poulie d'enroulement du tapis qui est libre ;
- la figure 9 représente, d'une façon plus détaillée, le module intermédiaire qui réalise la jonction entre deux modules basiques ;
- la figure 10 représente, schématiquement, un dispositif stoppeur installé dans la partie centrale du module intermédiaire ;
- la figure 11 est une vue schématique d'un tronçon de dispositif convoyeur qui est en pente, entre deux modules intermédiaires ;
- la figure 12 est une coupe selon 12-12 de la figure 11 montrant la section du module rectiligne en pente, avec son tapis particulier ;
- la figure 13 représente une moitié d'un module basique arqué, et en particulier un module concave ;
- la figure 14 est une vue de l'entrée du module basique arqué représenté figure 13 ;
- la figure 15 est une vue partielle du module basique arqué convexe.

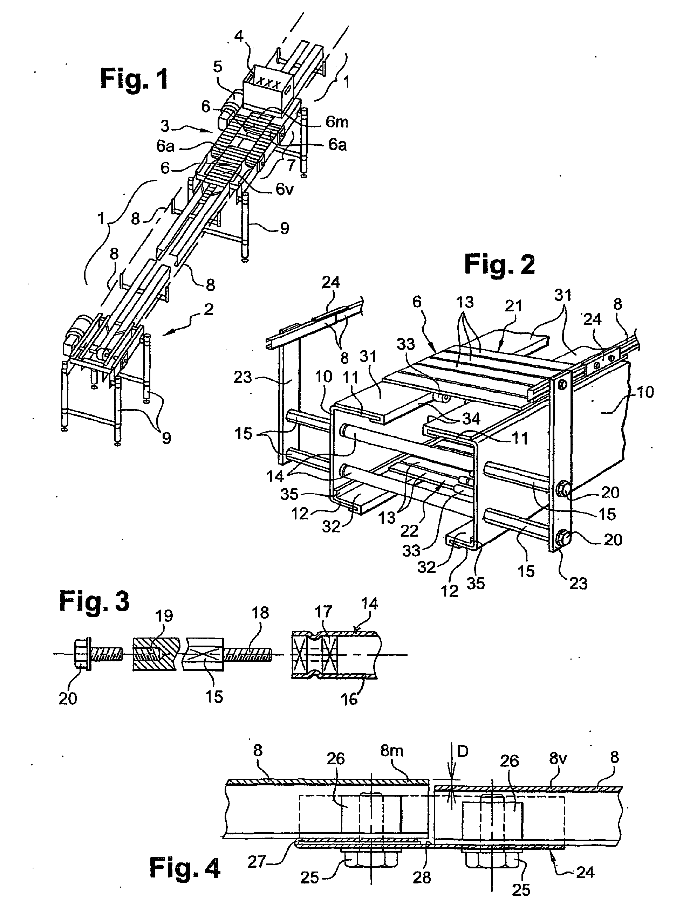

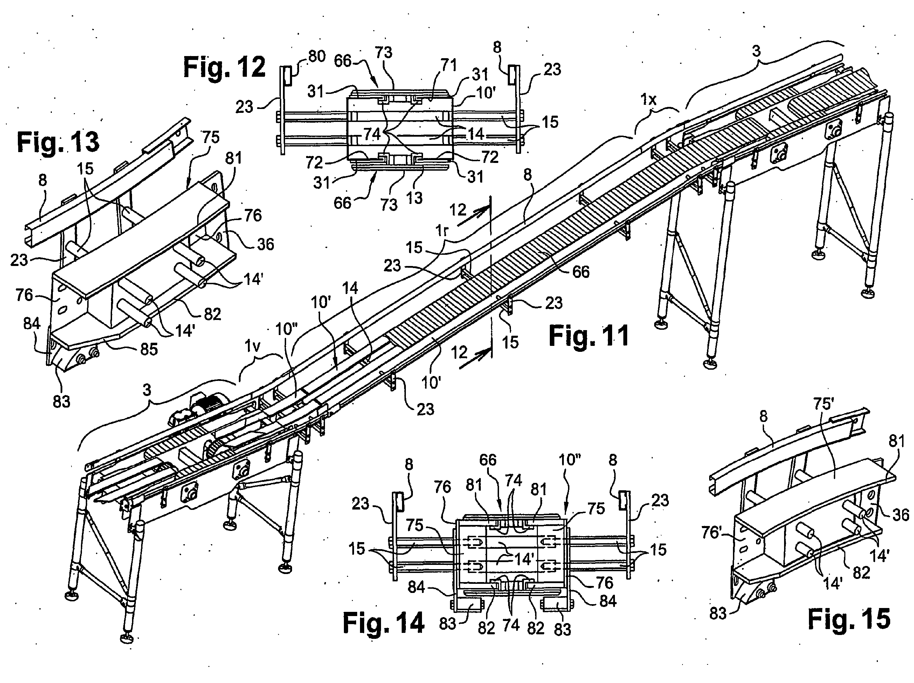

Le dispositif convoyeur représenté figure 1, et plus loin figure 11, comprend plusieurs modules convoyeurs réunis entre eux. Ainsi, figure 1, le dispositif convoyeur comprend : - un module dénommé ci-après module (1) basique, et, - d'autres modules qui, dans l'exemple de la figure 1, sont constitués d'un module (2) d'extrémité du type module d'extrémité aval motorisé, et d'un module (3) intermédiaire qui est interposé entre deux modules (1) basiques.

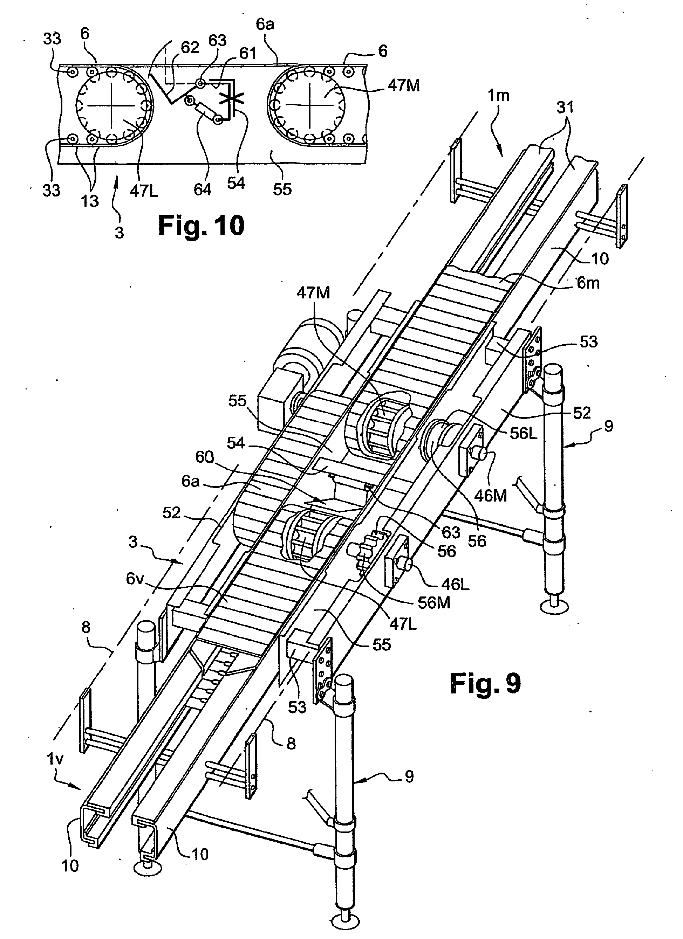

Le module (3) intermédiaire est en fait constitué, comme détaillé plus loin en liaison avec la figure 9, de l'équivalent de deux modules d'extrémité disposés dos à dos dont l'un correspond au module d'extrémité motorisé ci-dessus et l'autre à un module d'extrémité qui n'est pas motorisé.

Ces différents modules permettent de véhiculer des caisses et en particulier des caisses (4) susceptibles de contenir des bouteilles.

Sur le module (3) intermédiaire, on trouve un moto-réducteur (5) et les tapis (6) : le tapis (6m) disposé à l'amont et le tapis (6v) disposé à l'aval. Le moto-réducteur (5) est en prise avec l'extrémité du tapis (6m) amont. La continuité du convoyage entre les extrémités des tapis (6m) et (6v) est assurée par un moyen de convoyage (7) auxiliaire constitué de deux petits tapis (6a) sans fin en forme de chenillettes, placés de chaque côté des extrémités desdits tapis (6m) et (6v).

Les tapis (6) sont des tapis sans fin, métalliques, du type à chaîne à palettes et ils sont guidés, sur les modules (1) basiques, au moyen d'une structure détaillée figure 2.

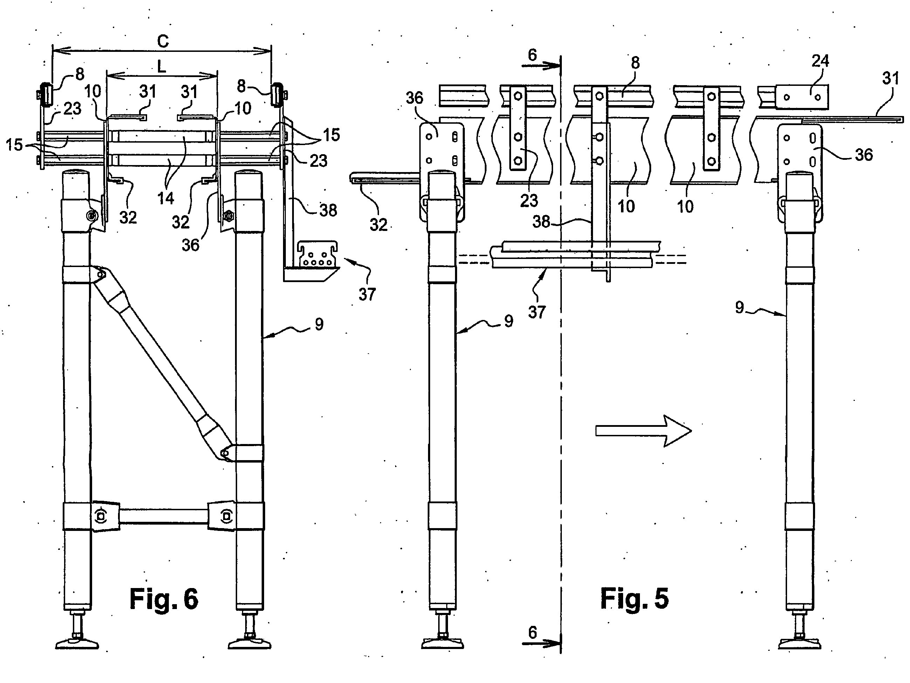

Toujours figure 1, on remarque que les caisses (4) sont guidées latéralement au moyen de rails (8) qui sont portés par les flancs des différents modules, lesquels modules sont munis de piètements (9) qui sont soit disposés dans les angles des modules (2) d'extrémité et du module (3) intermédiaire, soit sur l'extrémité des flancs pour les modules (1) basiques, comme montré figures 5 et 6.

La figure 2 montre d'une façon plus détaillée et en perspective, la structure générale du module (1) basique. Ce module (1) basique comprend deux flancs (10) identiques constitués de tôles en acier inoxydable. Ces flancs, à section en forme de C, sont munies de replis qui sont disposés en vis-à-vis : les replis (11) supérieurs sont au même niveau, tournés l'un vers l'autre, de même que les replis (12) inférieurs. Ces différents replis permettent, comme détaillés plus loin, de réaliser le portage du tapis (6) et en particulier de ses palettes (13), ainsi que son guidage.

Les flancs (10) sont assemblés entre eux au moyen de traverses qui sont en fait constituées de plusieurs entretoises (14) ; ces entretoises s'étendent entre les deux flancs (10) et sont fixées à ces derniers au moyen d'organes d'assemblage ou embouts (15) qui ont plusieurs fonctions.

Les entretoises (14) règlent l'écartement entre les flancs (10) ; elles sont, par exemple, constituées de tubes (16) dont chaque extrémité est munie d'un écrou (17) qui est serti dans l'extrémité du tube correspondant, comme représenté figure 3.

Les embouts (15) sont, par exemple, constitués de tronçons de barres hexagonales dont une extrémité est munie d'une vis (18) qui coopère avec l'écrou (17) correspondant de l'entretoise (14) et dont l'autre extrémité est, par exemple, munie d'un trou fileté (19) pour accueillir une vis (20).

Les entretoises (14) sont disposées par paires dans un plan qui est perpendiculaire au plan de circulation du tapis (6) et en particulier au brin (21) supérieur et au brin (22) inférieur de ce dernier ; cette disposition desdites entretoises permet d'installer, sur les extrémités des embouts (15), des chandelles (23) sur lesquelles sont fixés les rails (8). Ces rails (8) s'étendent sur tout le dispositif convoyeur et, au niveau de la jonction des différents modules, ils sont raccordés bout à bout par des éclisses (24).

La figure 4 montre le détail d'une éclisse (24) qui sert à raccorder les extrémités de deux rails (8) adjacents en réalisant, grâce à une cale détaillée ci-après, un léger décalage transversal au niveau de leur jonction pour éviter toute aspérité qui aurait pour conséquence de perturber la circulation des caisses (4). L'assemblage de l'éclisse (24) sur les rails (8) s'effectue au moyen de boulons classiques : une vis (25) et un écrou (26) en forme de parallélogramme.

Ces éclisses (24) sont constituées d'un tronçon de profilé à section en U. L'éclisse représentée figure 4, en coupe horizontale, est installée sur les extrémités de deux rails (8). Elle comporte, en guise de cale, une languette (27) dont la longueur est inférieure à la moitié de celle de l'éclisse (24), et cette languette s'interpose entre le fond (28) de ladite éclisse (24) et le rail (8m) amont de façon à réaliser un léger décalage latéral D entre les deux rails (8), c'est-à-dire ledit rail (8m) amont et le rail (8v) aval. Cette languette (27) est de préférence constituée d'un simple prolongement du seul fond (28) qui est replié et rabattu sur la surface interne dudit fond, créant une surépaisseur sur environ la moitié de la longueur de l'éclisse, suffisante pour obtenir le décalage souhaité entre les deux rails (8).

Le tapis (6) est porté et guidé au moyen de patins qui sont réalisés en matériau thermoplastique approprié. Des patins (31) et (32) sont installés sur les replis (11) supérieurs et (12) inférieurs des flancs (10) respectivement.

Le brin (21) supérieur du tapis (6) est guidé dans sa partie centrale, au niveau des moyeux (33) d'articulation des palettes (13) dudit tapis, entre les rebords (34) des patins (31). Le brin (22) inférieur est guidé au niveau des rebords latéraux de ses palettes (13), par des retours (35) aménagés à l'équerre sur les patins (32) inférieurs, contre la surface interne des flancs (10).

Ces patins (31) et (32) sont aménagés avec une section dont une partie est en forme de U, ce qui permet de les enfiler sur les replis supérieurs (11) et inférieurs (12) respectivement. Les ailes du U se resserrent vers l'ouverture pour réaliser une fixation des patins par pincement sur lesdits replis.

Pour réaliser une véritable continuité du portage et du guidage du tapis (6) au niveau des jonctions entre les différents modules, les patins supérieurs et inférieurs des modules (1) basiques sont disposés de façon à former un système mâle-femelle lors de l'assemblage bout à bout de ces différents modules entre eux.

La figure 5 montre de façon partielle, vu de côté, un module (1) basique dont la structure centrale, en forme de caisson, est portée par des piètements (9). Les flancs (10) comportent, à leurs extrémités, des platines (36) qui permettent d'assembler plusieurs modules basiques bout à bout.

La largeur L de la structure du caisson, et celle du tapis qui n'est pas apparent sur cette figure, est de l'ordre de la moitié de l'espace C entre les rails de guidage (8), soit la moitié de la dimension transversale des caisses. Cette largeur du caisson et du tapis peut être plus faible dans le cas d'un transport exclusif de caisses vides.

Pour faciliter leur montage sur chantier, chaque module basique peut comporter tout son équipement à savoir les rails (8) de guidage latéral et les patins (31) et (32). Le piètement (9) peut être pré-monté et disposé à part, notamment pour faciliter le transport.

Les patins (31) supérieurs ont une longueur qui correspond à celle des flancs (10) mais ces patins sont décalés par rapport aux replis desdits flancs (10) et sont en saillie du côté aval du module, sur une longueur de l'ordre, par exemple, de la largeur du tapis (6). La même disposition se retrouve sur les patins (32) inférieurs dont la longueur correspond à celle des flancs (10), mais ces patins (32) sont décalés par rapport auxdits flancs et sont en saillie sur une longueur qui est également de l'ordre de la largeur du tapis, du côté amont du module.

Avec cette disposition, l'assemblage entre deux modules basiques est du type mâle-femelle au niveau des patins et la continuité du guidage du tapis est encore améliorée par la découpe en biais des extrémités de ces patins qui forme une flèche orientée selon le sens d'avancement des caisses (4).

La figure 6 montre le module (1) basique avec son piètement (9), vu du bout, sans le tapis (6). Comme sur la figure 5, on trouve les flancs (10) portés par le piètement (9) au moyen des platines (36) et les entretoises (14) qui, avec les embouts (15), réalisent l'assemblage desdits flancs.

Les chandelles (23), solidaires des embouts (15), portent les rails (8) qui se situent au-dessus du niveau du plan des patins (31) supérieurs et du tapis (6) non représenté sur cette figure.

Avec le brin (21) supérieur et le brin (22) inférieur du tapis (6), la structure centrale du module basique se présente sous la forme d'un caisson fermé, ce qui a notamment pour effet d'éviter la pénétration de déchets ou de débris de toutes sortes entre les brins du tapis et d'assurer une plus grande sécurité pour le personnel qui circule autour et intervient sur ce matériel.

Pour améliorer la sécurité et simplifier certains aménagements, un chemin (37) est installé le long du convoyeur, pour accueillir les câbles et autres servitudes. Ce chemin (37) est porté au moyen d'équerres (38) qui sont disposées et fixées, comme les chandelles (23), sur les embouts (15) qui servent à l'assemblage des entretoises (14) du caisson central.

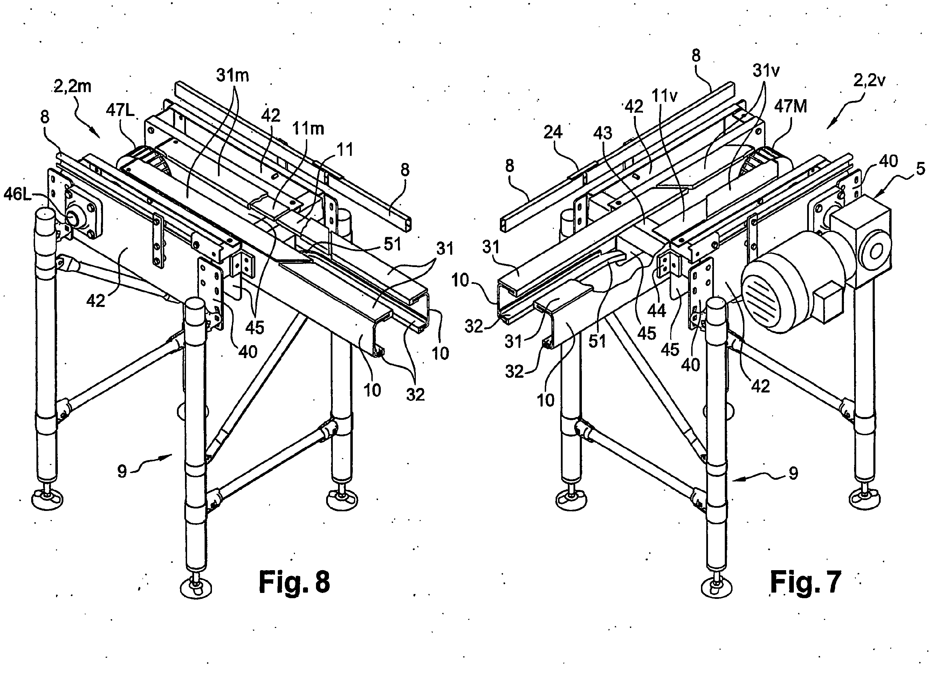

La figure 7 montre un module (2) d'extrémité du type motorisé, c'est-à-dire un module (2v) aval. Ce module (2v) comprend un cadre dont la largeur correspond sensiblement à celle du couloir de guidage des caisses (4). Ce cadre est porté par le piètement (9) au moyen de platines (40) et il est constitué de flancs (42) et d'au moins une traverse (43) ; le module (1) basique adjacent est fixé sur cette traverse (43) par l'intermédiaire d'équerres (44) ; ces équerres (44) sont interposées entre ladite traverse (43) et chaque flanc (10) dudit module basique.

Les flancs (42) du module (2) d'extrémité supportent, par l'intermédiaire des chandelles (23), les rails (8) de guidage des caisses (4) et on remarque la présence d'une éclisse (24) qui permet d'assembler le rail dudit module d'extrémité et le rail du module basique adjacent.

La traverse (43) porte également des parois (45) qui se situent dans le prolongement des flancs (10) du module (1) basique. A leur extrémité aval, les parois (45) sont traversées par l'arbre moteur (46M) qui porte la poulie (47M) motrice servant à l'enroulement et à l'entraînement du tapis (6), non représenté. L'arbre (46M) est guidé dans des paliers fixés sur les flancs (42) du module d'extrémité. Ce module (2v) d'extrémité comporte un moto-réducteur (5) pour entraîner le tapis.

Les parois (45) ont une section en forme de L renversé ; elles comportent, à leur partie supérieure, des replis (11v) qui sont situés dans le prolongement des replis (11) supérieurs des flancs (10) du module (1) basique adjacent. Ces replis (11v) s'étendent jusqu'à la poulie (47M) et s'arrêtent en amont de cette dernière.

Des patins (31v), identiques aux patins (31) du module (1) basique, sont installés sur les replis (11v) ; la longueur de ces patins (31v) est inférieure à celle desdits replis (11v) pour permettre l'installation desdits patins (31) dudit module basique, sur la portion libre desdits replis (11v) ; le raccordement des patins (31) et (31v) s'effectue en biais, formant là aussi une flèche orientée dans le sens d'avancement du tapis.

A leur extrémité aval, les patins (31 v) se terminent en biais également de façon à libérer progressivement, et sans bruit, le tapis qui est pris en charge par la poulie (47M). Ces patins (31v) peuvent également être solidarisés aux replis (11v) par des moyens appropriés, vis ou rivets.

Sur le module d'extrémité, seul le brin (21) supérieur du tapis est porté jusqu'à la poulie (47M) ; le brin (22) inférieur du tapis est libre verticalement ; il est simplement encadré par les parois (45) dont le rôle est de fermer l'espace entre les deux brins du tapis, de façon à éviter toute intrusion de débris et déchets de toutes sortes, véhiculés par les caisses (4). La hauteur de ces parois (45) est supérieure à celle des flancs (10) du module (1) basique pour tenir compte du mou sur le brin (22) inférieur du tapis. Ces parois (45) et les brins supérieur et inférieur du tapis forment, comme pour le module basique, une sorte de caisson fermé.

Toujours figure 7, on remarque un aménagement particulier de l'entrée inférieure du module (1) basique, c'est-à-dire de l'extrémité des patins (32) inférieurs et des replis (12) inférieurs qui portent ces patins. Les replis (12) inférieurs sont découpés et désolidarisés des flancs (10) pour former une rampe (51) ; cette rampe (51) est arrondie et accueille en douceur le brin inférieur du tapis, réduisant là aussi le bruit causé par ledit tapis. Ainsi, entre cette rampe (51) et les poulies (47), le brin inférieur du tapis est libre et, par simple gravité, réalise automatiquement une certaine tension dudit tapis.

La figure 8 montre un module (2m) d'extrémité amont qui se différencie du module (2v) d'extrémité aval par la présence d'une poulie (47L) qui est libre, non motorisée, et par la présence de patins (31m) qui ont une longueur supérieure à celle des replis (11m) sur lesquels ils sont installés. Les patins (31m) s'étendent en effet en saillie, au-delà du cadre, sur une longueur qui est, par exemple, de l'ordre de la largeur du tapis, pour être enfilés sur la portion aval des replis (11) supérieurs des flancs (10) du module (1) basique.

Le système de raccordement mâle-femelle des patins supérieurs s'applique aussi au raccordement d'un module basique avec un module (2) d'extrémité ou avec un module (3) intermédiaire.

La figure 9 montre un module (3) intermédiaire, de façon schématique. Ce module consiste en quelque sorte en un assemblage de deux modules d'extrémité mis dos à dos. Il est constitué d'un grand cadre rectangulaire dont la largeur est de l'ordre de celle du couloir de guidage des caisses (4), lequel cadre est porté par le piètement (9) et il comprend des flancs (52), des traverses (53) situées aux extrémités et au moins une traverse (54) centrale.

Ces différentes traverses portent des parois (55) longitudinales et verticales dont l'écartement correspond à celui des flancs (10) des modules basiques adjacents, lesquelles parois (55) ont une section en forme de L renversé, comme détaillées précédemment en liaison avec la figure 7, et elles jouent ici le même rôle. Ces parois (55) sont traversées par les arbres (46M), (46L), qui portent, respectivement, les poulies (47M), (47L) sur lesquelles s'enroulent les tapis (6) des modules (1) basiques adjacents, c'est-à-dire le tapis (6v) aval et le tapis (6m) amont, respectivement.

Pour assurer la continuité entre les extrémités du tapis (6m) amont et du tapis (6v) aval, un moyen de convoyage (7), comme repéré figure 1, est installé entre les deux. Ce moyen de convoyage (7) intermédiaire comprend des tapis (6a) sans fin qui constituent des tapis auxiliaires en forme de chenillettes ; ils sont installés latéralement, de part et d'autre des extrémités des tapis (6). Ces tapis (6a) constituent de véritables petits convoyeurs qui sont disposés entre les flancs (52) et les parois (55). Chaque tapis (6a) est tendu entre des poulies (56) dont l'une, la poulie (56M) est motrice et l'autre, la poulie (56L) est libre.

La poulie (56M) est solidaire de l'arbre (46L) et elle est aussi solidaire, par l'intermédiaire dudit arbre, de la poulie (47L) du tapis aval (6v). L'autre poulie (56L) est disposée sur l'arbre (46M) mais, soit elle est libre sur cet arbre, soit elle est lisse, comme représentée sur la figure de façon à rendre indépendants les tapis (6a) auxiliaires et le tapis (6v) aval par rapport au tapis (6m) amont. En fait, les tapis (6v) sont entraînés par le tapis aval (6a), à la même vitesse que ce dernier.

Le module (3) intermédiaire est également aménagé, au niveau des patins de portage et de guidage des tapis, comme détaillé précédemment pour les modules d'extrémité, figures 7 et 8, avec des raccords mâle-femelle pour les patins supérieurs.

Dans sa partie centrale, entre les tapis (6m), (6v) et les tapis (6a), le module (3) intermédiaire peut accueillir des accessoires comme, par exemple, un stoppeur, c'est-à-dire un organe qui arrête les caisses selon les nécessités.

Le stoppeur (60) qui est adapté au module (3) intermédiaire est représenté schématiquement figure 10. Il comprend un bâti (61) en forme de chape, aménagé pour être fixé par des moyens appropriés sur la traverse (54) située dans la partie centrale dudit module (3) intermédiaire.

Le bâti (61) comporte, à sa partie supérieure, une butée (62) qui est articulée sur ledit bâti au moyen d'un axe (63) disposé transversalement, lequel axe (63) est situé sous le niveau du brin supérieur du tapis (6a).

La butée (62) se présente sous la forme d'une équerre, dont une branche est articulée sur l'axe (63), et l'autre branche est dimensionnée pour pouvoir s'escamoter sous le niveau du tapis (6a), comme représentée sur la figure, ou pour s'étendre en saillie au-dessus dudit niveau, en position active, pour arrêter les caisses.

La butée (62) est manoeuvrée au moyen d'un vérin (64) qui s'étend entre ladite butée et le bâti (61), à la partie inférieure de ce dernier.

Tel que représenté figure 11, le dispositif convoyeur comprend un tronçon en pente, installé entre deux modules (3) d'extrémité qui correspondent à ceux détaillés auparavant en liaison avec les figures 1 et 9.

Le tronçon en pente comprend un module (1r) basique qui est rectiligne et ce module est disposé entre deux modules arqués : un module (1v) qui est de forme concave et un module (1x) qui est de forme convexe.

Le module (1r) basique est un module rectiligne dont la pente est de l'ordre de 20 à 22 %. Ce module rectiligne (1r) peut être constitué de plusieurs éléments et sa longueur dépend de la dénivellation entre les deux modules (3) d'extrémité.

Le module (1v) arqué, de forme concave, réalise une jonction tangentielle entre le module (1r) rectiligne et le module (3) d'extrémité de la partie basse; de la même façon, le module (1x) arqué, de forme convexe, réalise la jonction tangentielle entre le module (1r) rectiligne et le module (3) d'extrémité du niveau supérieur.

Pour ce type de tronçon de convoyeur en pente, le tapis (66) utilisé est du type à palettes, comme précédemment, mais chaque palette comporte, en plus, sur sa surface externe, un revêtement en matériau du genre caoutchouc pour éviter le glissement des caisses dans la pente.

La figure 12 montre, en coupe, le module (1r) rectiligne. Comme le module (1) représenté figure 2, il est constitué de flancs (10') qui sont identiques, constitués de tôles métalliques munies de leurs replis disposés en vis-à-vis. Ces flancs (10') sont assemblés entre eux au moyen des entretoises (14) qui s'étendent entre lesdits flancs et ils sont solidarisés au moyen d'organes d'assemblage ou embouts (15) qui permettent, comme détaillé précédemment, figure 2, l'assemblage desdites entretoises (14) et le portage des chandelles (23) sur lesquelles sont fixés les rails (8) servant au guidage des caisses de bouteilles.

Dans cette forme de réalisation, compte-tenu de la particularité du tapis (66), les replis (71) supérieurs et les replis (72) inférieurs ont la même longueur. En effet le tapis (66) est constitué de palettes (13) et, au dos de ces palettes, on trouve des crochets (74) en forme de d'équerres qui sont en prise avec les replis (71) et (72).

Les brins supérieur et inférieur du tapis (66) sont guidés par les replis (71) et (72) et par les crochets (74) qui empêchent le bâillement desdits brins par rapport auxdits replis. En fait les crochets (74) glissent sur des patins (31) installés sur les replis (71) et (72) ; ces patins sont du même type que les patins disposés sur les replis (11) des flancs (10), comme représentés figure 2, et ces patins (31) sont disposés sur les deux replis (71) et (72) des flancs (10').

Ces flancs (10') et le tapis (66) confèrent également une forme de caisson à la partie centrale du convoyeur, comme pour le module détaillé figure 2.

Chaque module arqué (1v, 1x) présente aussi une forme du type caisson, dans le prolongement du module (1r) rectiligne. Leur construction est toutefois différente ; en effet, ils sont aménagés de façon à permettre un raccordement tangentiel entre le module (1r) et le module adjacent qui peut être de tous types, soit basique, soit d'extrémités ou intermédiaire comme représenté figure 11.

Le module arqué, représenté figures 13 et 14, comprend une partie centrale constituée de deux flancs (10") à section en C disposés en vis-à-vis. Chaque flanc comprend deux parties : - un bloc (75) dont la section est en C et, - une plaque (76) qui est disposée contre le fond dudit C, sur sa face externe.

Le bloc (75) est en matériau thermoplastique ; il est usiné pour obtenir la section en C et en particulier pour façonner des guides qui sont équivalents aux replis des flancs (10, 10') ; il comporte un guide (81) supérieur et un guide (82) inférieur et il comporte aussi d'autres aménagements en forme de forages pour la mise en place des entretoises (14) qui permettent, comme détaillé auparavant, l'assemblage des flancs entre eux et le montage des guides (8).

La plaque (76) est en métal ; elle sert de renfort au bloc (75) et elle permet l'assemblage du module arqué avec les modules adjacents par l'intermédiaire de platines (36), par exemple. Le bloc (75) comporte aussi des dégagements latéraux qui permettent le passage des vis d'assemblage de la plaque (76).

Pour guider et accompagner le brin inférieur du tapis (66) à l'entrée et à la sortie des modules arqués, un patin (83) est disposé à l'entrée ou à la sortie de chaque bloc (75), sous le guide (82) inférieur. Ce patin est fixé sur un support (84) qui est solidaire de la plaque (76) et il comporte une surface de guidage en pente douce, pour amener les palettes sous le guide (82) inférieur. Ce guide inférieur comporte une découpe (85) en biais pour faciliter la mise en place des crochets (74) qui servent à supporter le brin inférieur du tapis (66).

La figure 14 montre, vue de face, l'extrémité du module arqué, côté patin (83). On retrouve les blocs (75) disposés en vis-à-vis, dont l'écartement est réalisé au moyen des entretoises (14'). Ces entretoises (14') se logent dans des forages des blocs (75) et l'ensemble, c'est-à-dire le bloc (75) et la plaque (76), est solidarisé au moyen des organes d'assemblage en forme d'embouts (15). Comme précédemment, ces embouts (15) servent à la fixation des chandelles (23) qui supportent, de chaque côté du caisson central, une portion des rails (8) de guidage.

Toujours sur cette figure 14, on remarque la présence des patins (83) qui facilitent la mise en place des crochets (74) sur les guides (82) inférieurs.

La figure 15 montre une partie du module (1x) arqué convexe. Ce module comporte les mêmes éléments que le module (1v) détaillé précédemment figure 13, sauf que le rayon de courbure est inversé. Il comporte, de la même façon, un bloc (75') en matériau thermoplastique, usiné pour donner le rayon de courbure souhaité et pour former une section en C. Il comporte également des patins (83). Ces patins (83) réalisent le guidage du brin inférieur du tapis (66).

Les mêmes entretoises (14') assurent l'assemblage des différents éléments à savoir les deux blocs (75') et les deux plaques (76') ainsi que les chandelles (23) qui supportent les portions du rail de guidage (8).

Le rayon de courbure et la longueur des modules arqués (1v) et (1x) permettent d'établir l'angle des tronçons en pente.

## Revendications

1. Dispositif convoyeur à tapis du type à chaîne sans fin à palettes, pour le transport de caisses de bouteilles, comprenant :
- au moins un module basique (1) constitué d'une structure centrale qui comporte des flancs (10, 10', 10") à section en C disposés de façon à placer leurs replis en vis-à-vis, lesquels flancs (10, 10', 10") sont assemblés par des traverses en forme d'entretoises (14, 14') et ils sont aménagés pour porter et guider les brins supérieur et inférieur (21, 22), dudit tapis (6, 66), laquelle structure centrale a une largeur qui correspond à celle dudit tapis et elle forme une sorte de caisson fermé, délimité par lesdits flancs (10, 10', 10") et par lesdits brins supérieur et inférieur (21, 22) dudit tapis (6, 66) ;
- des modules (2) d'extrémité aménagés avec des parois longitudinales (45) à section en forme de L renversé, lesquelles parois (45) accueillent et portent chacune, avec des moyens appropriés, l'extrémité d'un module (1) basique adjacent, et servent de guides, d'une part, pour ledit brin supérieur (21) sur l'aile horizontale dudit L et, d'autre part, pour ledit brin inférieur (22) entre les ailes verticales dudit L, lesquels modules (2) d'extrémité comportent chacun une poulie (47) d'enroulement dudit tapis (6, 66) et, selon le cas, une motorisation (5) de ladite poulie.

2. Dispositif convoyeur selon la revendication 1, **caractérisé en ce qu'**il comporte un module basique constitué d'un module rectiligne (1r) et de deux modules arqués (1v, 1x) disposés à chaque extrémité dudit module rectiligne (1r), lesquels modules arqués (1v, 1x) sont en forme d'arc de cercle : l'un est concave, l'autre est convexe, pour permettre une jonction tangentielle entre ledit module (1r) rectiligne et chaque module (2) d'extrémité.

3. Dispositif convoyeur selon la revendication 2, **caractérisé en ce que** chaque module arqué (1v, 1x) est constitué de flancs (10") à section en C disposés en vis à vis, dont la partie servant de guide au tapis est façonnée dans un bloc (75) en matériau thermoplastique, lequel bloc (75) est associé et fixé à une plaque (76) métallique qui réalise la continuité et la jonction entre les modules rectilignes (1r) et le modules d'extrémité (2) adjacents.

4. Dispositif convoyeur selon l'une quelconque des revendications 1 à 3, **caractérisé en ce qu'**il comporte un module intermédiaire (3) qui correspond à l'assemblage de deux modules d'extrémité (2) placés dos à dos, lequel module intermédiaire (3) s'interpose entre deux modules basiques (1), lequel module intermédiaire (3) comporte notamment : - des moyens pour accueillir et porter les extrémités desdits modules basiques (1), - des parois longitudinales (55), dont la section est en forme de L renversé, disposées dans le prolongement des flancs (10, 10', 10") desdits modules basiques (1), - des poulies (47) d'enroulement des tapis (6, 66) de chaque module basique (1) adjacent dont l'une est motrice et l'autre libre, - des moyens de convoyage (7) auxiliaires (6a) du genre tapis sans fin à chaîne ou autres, qui assurent la continuité du convoyage entre les extrémités desdits tapis (6, 66), lesquels moyens de convoyage auxiliaires (6a) sont entraînés par le tapis aval (6, 66) dudit module basique (1), grâce à leurs propres poulies (56m) d'enroulement qui sont solidaires de la poulie (47L) et montées sur le même arbre que cette poulie (47L), laquelle poulie (47L) est libre et réalise l'enroulement dudit tapis (6, 66) aval.

5. Dispositif convoyeur selon l'une quelconque des revendications 1 à 4, **caractérisé en ce que** les traverses d'assemblage des flancs (10, 10', 10") à section en C sont constituées - d'entretoises (14, 14') qui sont disposées entre lesdits flancs (10, 10', 10") et - d'organes multifonctions en forme d'embouts (15), lesquelles entretoises (14, 14') sont disposées par paires dans un plan perpendiculaire aux brins supérieur et inférieur (21, 22) du tapis (6, 66), lesquels embouts (15) permettent l'ancrage de chandelles (23) qui servent de support pour des rails (8) latéraux chargés du guidage des caisses (4), lesquels embouts (15) ont une longueur adaptée pour établir la largeur du couloir de guidage.

6. Dispositif convoyeur selon l'une quelconque des revendications 1 à 5, **caractérisé en ce qu'**il comporte, sur les replis supérieurs et inférieurs (11m, 11v) des flancs (10, 10') des modules basiques (1), des patins (31, 32), en matériau thermoplastique, qui font office de surface de portage et de guidage pour les deux brins (21, 22) du tapis (6, 66), le brin supérieur (21) et le brin inférieur (22), lesquels patins (31, 32) ont une section en U dont les rebords se resserrent en allant vers l'ouverture dudit U pour permettre leur fixation par pincement sur lesdits replis (11m, 11v).

7. Dispositif convoyeur selon l'une quelconque des revendications 1 à 6, **caractérisé en ce que** le module (2) d'extrémité est constitué d'un cadre dont la largeur correspond sensiblement à celle du couloir de convoyage, lequel cadre comporte, dans sa partie centrale, les deux parois (45) longitudinales dont l'écartement correspond à celui des flancs du module basique (1) adjacent, lesquelles parois (45) sont munies, sur leur replis (11m, 11v) disposés à leurs parties supérieures, de patins (31m, 31v) du même type que ceux installés sur lesdits flancs (10, 10', 10") dudit module (1) basique, et elles sont traversées par l'arbre (46) qui porte la poulie (47) d'enroulement du tapis (6, 66), lequel arbre s'étend entre des paliers disposés sur les flancs (42) dudit cadre.

8. Dispositif convoyeur selon la revendication 7, **caractérisé en ce que** le module d'extrémité (2v), dont la poulie (47M) est motrice, comporte des parois (45) munies de replis (11v) supérieurs, lesquels replis accueillent des patins (31v) qui s'étendent seulement sur une partie de la longueur desdits replis (11v), de façon à permettre l'installation des patins (31) supérieurs d'un module (1) basique sur la partie libre desdits replis (11v), lesquels patins (31v) supérieurs dudit module d'extrémité (2v) se terminent en biais, en forme de flèche.

9. Dispositif convoyeur selon la revendication 7, **caractérisé en ce que** le module d'extrémité (2m), dont la poulie (47L) est libre, non motorisée, comporte des patins (31m) qui s'étendent au-delà du cadre dudit module (2m) sur une longueur de l'ordre de la largeur du tapis (6) de façon à permettre l'emboîtage desdits patins (31m) supérieurs dudit module d'extrémité (2m), sur les replis (11) supérieurs des flancs (10) du module (1) basique adjacent

10. Dispositif convoyeur selon l'une quelconque des revendications 4 à 9, **caractérisé en ce que** le module intermédiaire (3) est constitué d'un grand cadre rectangulaire comprenant des flancs et des traverses, lesquelles traverses supportent les deux parois (55) longitudinales dont l'écartement correspond à celui des flancs (10, 10', 10") des modules basiques (1) pour prolonger lesdits flancs (10, 10', 10"), lesquelles parois (55) longitudinales du module (3) intermédiaire comportent des replis supérieurs identiques à ceux des parois (45) des modules d'extrémité (2) et ces replis comportent des patins qui, du côté de la poulie motrice, sont plus courts que lesdits replis pour permettre une installation des patins (31) du module basique (1) adjacent sur ces derniers replis, alors que du côté de la poulie libre (46L), les patins débordent du cadre dudit module intermédiaire (3) et s'emboîtent sur les replis supérieurs de l'autre module basique (1) adjacent, sur une longueur qui est, par exemple, de l'ordre de la largeur du tapis (6).

11. Dispositif convoyeur selon l'une quelconque des revendications 4 à 10, **caractérisé en ce que** la partie centrale du module intermédiaire (3), situtée entre les poulies des tapis (6, 66) des modules basiques (1) et les tapis (6a) auxiliaires disposés latéralement, comporte un accessoire du type stoppeur (60) qui permet d'immobiliser les caisses (4), lequel stoppeur (60) est constitué d'une butée (62) qui est articulée sur un bâti (61) en forme de chape, lequel bâti (61) comporte un ancrage pour le vérin (64) de manoeuvre de ladite butée (62) et il est muni de moyens pour être fixé dans l'espace central dudit module intermédiaire (3), sur une traverse (54).

12. Dispositif convoyeur selon la revendication 5, **caractérisé en ce que** les moyens de raccordement des rails (8) de guidage sont constitués d'éclisses (24) dont la section est en forme de U pour épouser extérieurement lesdits rails (8), chaque éclisse (24) étant associée à une cale qui s'étend sur la moitié de la longueur de la surface interne du fond (28) dudit U, laquelle cale permet de réaliser un décalage latéral du rail (8v) aval par rapport au rail (8m) amont pour éviter toute aspérité, laquelle cale se présente sous la forme d'un repli disposé dans ledit U, lequel repli est constitué d'une languette (27) aménagée dans le prolongement de la seule face interne dudit U, faisant ainsi partie intégrante de ladite éclisse (24).

13. Dispositif convoyeur selon la revendication 5, **caractérisé en ce qu'**il comporte des moyens en forme d'équerres (38) pour supporter un chemin (37) susceptible d'accueillir des câbles ou autres, lesquelles équerres (38) sont disposées et fixées, comme les chandelles (23), sur les embouts (15) qui servent à l'assemblage des entretoises (14) du caisson central.

## Claims

1. Belt conveyor device of the endless slat-band chain-driven type for transporting crates of bottles, comprising:
- at least one basic module (1) consisting of a central structure which comprises sidewalls (10, 10', 10'') of C-section positioned in such a way that their folds face one another, which sidewalls (10, 10', 10'') are assembled by crossmembers in the form of spacer pieces (14, 14') and are configured in such a way as to support and guide the upper and lower lengths (21, 22) of the said belt (6, 66), which central structure has a width corresponding to that of the said belt and forms a kind of closed box section delimited by the said sidewalls (10, 10', 10'') and by the said upper and lower lengths (21, 22) of the said belt (6, 66);
- end modules (2) configured with longitudinal walls (45) of inverted L-section, which walls (45) each house and bear, via appropriate means, the end of an adjacent basic module (1) and act as guides, on the one hand, for the said upper length (21) along the horizontal leg of the said L and, on the other hand, for the said lower length (22) between the vertical legs of the said L, which end modules (2) each comprise a pulley (47) around which the said belt (6, 66) is wrapped and, as appropriate, a drive (5) for the said pulley.

2. Conveyor device according to Claim 1, **characterized in that** it comprises a basic module consisting of a straight module (1r) and of two curved modules (1v, 1x) positioned one at each end of the said straight module (1r), which curved modules (1v, 1x) are in the form of circular arcs: one is concave and the other is convex, to allow the said straight module (1r) and each end module (2) to meet at a tangent.

3. Conveyor device according to Claim 2, **characterized in that** each curved module (1v, 1x) consists of sidewalls (10'') of C-section positioned facing one another, of which the part that serves to guide the belt is shaped from a block (75) of thermoplastic, which block (75) is associated with and fixed to a metal plate (76) which provides the continuity and the join between the straight modules (1r) and the adjacent end modules (2).

4. Conveyor device according to any one of Claims 1 to 3, **characterized in that** it comprises an intermediate module (3) which corresponds to the assembly of two end modules (2) positioned back to back, which intermediate module (3) is inserted between two basic modules (1), which intermediate module (3) particularly comprises: - means for housing and supporting the ends of the said basic modules (1), longitudinal walls (55) of inverted L-section, positioned in the continuation of the sidewalls (10, 10', 10'') of the said basic modules (1), - pulleys (47) around which the belts (6, 66) of each adjacent basic module (1) are wrapped, one of which pulleys is driven and the other of which is free, - auxiliary conveying means (7) (6a) of the chain-driven endless belt or some other kind, which ensure the continuity of conveying between the ends of the said belts (6, 66), which auxiliary conveying means (6a) are driven by the downstream belt (6, 66) of the said basic module (1) by virtue of their own wrap-around pulleys (56m) which are secured to the pulley (47L) and mounted on the same shaft as this pulley (47L), which pulley (47L) is free and has the said downstream belt (6, 66) wrapped around it.

5. Conveyor device according to any one of Claims 1 to 4, **characterized in that** the crossmembers assembling the C-section sidewalls (10, 10', 10'') consist: - of spacer pieces (14, 14') which are positioned between the said sidewalls (10, 10', 10''), and - of multipurpose components in the form of end pieces (15), which spacer pieces (14, 14') are arranged in pairs in a plane perpendicular to the upper and lower lengths (21, 22) of the belt (6, 66), which end pieces (15) can be used for anchoring props (23) which support lateral rails (8) the purpose of which is to guide the crates (4), which end pieces (15) are of a length suited to establishing the width of the guide lane.

6. Conveyor device according to any one of Claims 1 to 5, **characterized in that** it comprises, on the upper and lower folds (11m, 11v) of the sidewalls (10, 10') of the basic modules (1), thermoplastic runners (31, 32) which act as supporting and guiding surfaces of the two lengths (21, 22) of the belt (6, 66), the upper length (21) and the lower length (22), which runners (31, 32) have a U-section the edges of which converge towards the open end of the said U so that they can be clipped onto the said folds (11m, 11v).

7. Conveyor device according to any one of Claims 1 to 6, **characterized in that** the end module (2) consists of a frame the width of which corresponds substantially to that of the conveying lane, which frame comprises, in its central part, the two longitudinal walls (45) the separation of which corresponds to that of the sidewalls of the adjacent basic module (1), which walls (45) are equipped, on their folds (11m, 11v), positioned at their upper parts, with runners (31m, 31v) of the same kind as those fitted to the said sidewalls (10, 10', 10'') of the said basic module (1) and have passing through them the shaft (46) which supports the pulley (47) around which the belt (6, 66) is wrapped, which shaft extends between bearings positioned on the sidewalls (42) of the said frame.

8. Conveyor device according to Claim 7, **characterized in that** the end module (2v), the pulley (47M) of which is driven, has walls (45) equipped with upper folds (11v), which folds house runners (31v) which extend over just part of the length of the said folds (11v) so as to allow the upper runners (31) of a basic module (1) to be installed in the unoccupied part of the said folds (11v), which upper runners (31v) of the said end module (2v) end at an angle, in the form of an arrowhead.

9. Conveyor device according to Claim 7, **characterized in that** the end module (2m), the pulley (47L) of which is free, and not driven, comprises runners (31m) which extend beyond the frame of the said module (2m) over a length of the order of the width of the belt (6) so as to allow the said upper runners (31m) of the said end module (2m) to fit onto the upper folds (11) of the sidewalls (10) of the adjacent basic module (1).

10. Conveyor device according to any one of Claims 4 to 9, **characterized in that** the intermediate module (3) consists of a large rectangular frame comprising sidewalls and crossmembers, which crossmembers support the two longitudinal walls (55) the separation of which corresponds to that of the sidewalls (10, 10', 10'') of the basic modules (1) so as to extend the said sidewalls (10, 10', 10''), which longitudinal walls (55) of the intermediate module (3) comprise upper folds identical to those of the walls (45) of the end modules (2) and these folds have runners which, on the driven pulley side, are shorter than the said folds so as to allow the runners (31) of the adjacent basic module (1) to be installed on these latter folds, whereas on the free pulley (46L) side, the runners protrude from the frame of the said intermediate module (3) and fit onto the upper folds of the other adjacent basic module (1) over a length which is, for example, of the order of the width of the belt (6).

11. Conveyor device according to any one of Claims 4 to 10, **characterized in that** the central part of the intermediate module (3), which lies between the pulleys of the belts (6, 66) of the basic modules (1) and the auxiliary belts (6a) positioned to the side, comprises an accessory of the arrester type (60) that allows the crates (4) to be immobilized, which arrester (60) consists of a stop (62) articulated to a clevis-shaped mount (61), which mount (61) has an anchorage for the actuator (64) that operates the said stop (62) and is equipped with means for fixing it in the central space of the said intermediate module (3) on a crossmember (54).

12. Conveyor device according to Claim 5, **characterized in that** the means of connecting the guide rails (8) consist of fishplates (24) which are of U-shaped cross section in order externally to hug the said rails (8), each fishplate (24) being associated with a shim which extends over half the length of the internal surface of the bottom (28) of the said U, which shim allows the downstream rail (8v) to be offset sideways relative to the upstream rail (8m) in order to avoid any unevenness, which shim is in the form of a fold positioned within the said U, which fold consists of a tab (27) formed in the continuation of the only internal face of the said U, thus forming an integral part of the said fishplate (24).

13. Conveyor device according to Claim 5, **characterized in that** it comprises means (38) in the form of angle brackets (38) to support trunking (37) for housing cables or the like, which angle brackets (38) are positioned and fixed, like the props (23), on the end pieces (15) used to assemble the spacer pieces (14) of the central box section.

## Patentansprüche

1. Fördervorrichtung mit einem Förderband vom Typ Endlosplattenkette für den Transport von Flaschenkästen, die:
- mindestens ein Grundmodul (1), das von einer mittigen Konstruktion gebildet wird, die Seitenflächen (10, 10', 10") mit C-förmigem Querschnitt umfasst, die derart angeordnet sind, dass sich ihre umgebogenen Ränder einander gegenüberstehen, wobei die Seitenflächen (10, 10', 10") durch Traversen in Form von Querstreben (14, 14') miteinander verbunden und angeordnet sind, um den oberen (21) und den unteren Trum (22) des Förderbandes (6, 66) zu tragen und zu führen, und die mittige Konstruktion eine Breite, die derjenigen des Förderbandes entspricht, besitzt und eine Art geschlossenen Kasten, der von den Seitenflächen (10, 10', 10") und dem oberen (21) und dem unteren Trum (22) des Förderbandes (6, 66) begrenzt wird, bildet, und
- Endmodule (2), die mit Längswänden (45) mit einem Querschnitt in Form eines umgekehrten L angeordnet sind, wobei diese Wände (45) jeweils mit geeigneten Mitteln das Ende eines angrenzenden Grundmoduls (1) aufnehmen und tragen und einerseits für den oberen Trum (21) auf dem waagerechten Schenkel des L und andererseits für den unteren Trum (22) zwischen den senkrechten Schenkeln des L als Führungen dienen und die Endmodule (2) jeweils eine Trommel (47) für das Umlaufen des Förderbandes (6, 66) und gegebenenfalls einen Motorantrieb (5) für diese Trommel enthalten, umfasst.

2. Fördervorrichtung nach Anspruch 1, **dadurch gekennzeichnet, dass** sie ein Grundmodul umfasst, das von einem geraden Modul (1r) und zwei bogenförmigen Modulen (1v, 1x), die an jedem Ende des geraden Moduls (1r) angeordnet sind, gebildet wird, wobei die bogenförmigen Module (1v, 1x) die Form eines Kreisbogens haben und das eine konkav und das andere konvex ist, um eine tangentiale Verbindung zwischen dem geraden Modul (1r) und jedem Endmodul (2) zu ermöglichen.

3. Fördervorrichtung nach Anspruch 2, **dadurch gekennzeichnet, dass** jedes bogenförmige Modul (1v, 1x) von einander gegenüber angeordneten Seitenflächen (10") mit C-förmigem Querschnitt gebildet wird, dessen als Führung für das Förderband dienender Teil aus einem Block (75) aus einem thermoplastischen Material gearbeitet ist, wobei dieser Block (75) mit einer Metallplatte (76) verbunden und daran befestigt ist, die die Kontinuität und die Verbindung zwischen den geraden Modulen (1r) und den angrenzenden Endmodulen (2) herstellt.

4. Fördervorrichtung nach einem der Ansprüche 1 bis 3, **dadurch gekennzeichnet, dass** sie ein Zwischenmodul (3) umfasst, das der Verbindung von zwei Rücken an Rücken angeordneten Endmodulen (2) entspricht, wobei das Zwischenmodul (3) zwischen zwei Grundmodule (1) eingefügt ist und dieses Zwischenmodul (3) insbesondere:
- Mittel, um die Enden der Grundmodule (1) aufzunehmen und zu tragen,
- Längswände (55), deren Querschnitt die Form eines umgekehrten L hat und welche in Verlängerung der Seitenflächen (10, 10', 10") der Grundmodule (1) angeordnet sind,
- Trommeln (47) für das Umlaufen der Förderbänder (6, 66) eines jeden benachbarten Grundmoduls (1), wovon eine motorisch angetrieben und die andere frei ist, und
- ergänzende Fördermittel (7) von der Art eines endlosen Kettenförderbandes (6a) oder dergleichen, die für die Kontinuität des Transports zwischen den Enden der Förderbänder (6, 66) sorgen, wobei die ergänzenden Fördermittel (6a) von dem nachfolgenden Förderband (6, 66) des Grundmoduls (1) durch ihre eigenen Umlauftrommeln (56m) angetrieben werden, die mit der Trommel (47L) fest verbunden und auf derselben Welle wie diese Trommel (47L) angebracht sind, wobei die Trommel (47L) frei ist und für das Umlaufen dieses nachfolgenden Förderbandes (6, 66) sorgt,
umfasst.

5. Fördervorrichtung nach einem der Ansprüche 1 bis 4, **dadurch gekennzeichnet, dass** die Verbindungstraversen der Seitenflächen (10, 10', 10") mit C-förmigem Querschnitt von Querstreben (14, 14'), die zwischen diesen Seitenflächen (10, 10', 10") angeordnet sind, und Multifunktionsorganen in Form von Endstücken (15) gebildet werden, wobei die Querstreben (14, 14') paarweise in einer Ebene angeordnet sind, die senkrecht zu dem oberen (21) und dem unteren Trum (22) des Förderbandes (6, 66) steht, und die Endstücke (15) die Befestigung senkrechter Streben (23) erlauben, die als Träger für Seitenschienen (8) dienen, die die Aufgabe der Führung der Kästen (4) erfüllen, und die Endstücke (15) eine Länge haben, die geeignet ist, die Breite des Führungskorridors sicherzustellen.

6. Fördervorrichtung nach einem der Ansprüche 1 bis 5, **dadurch gekennzeichnet, dass** sie auf den oberen (11m) und unteren umgebogenen Rändern (11v) der Seitenflächen (10, 10') der Grundmodule (1) Gleitflächen (31, 32) aus einem thermoplastischen Material umfasst, die als Trag- und Führungsfläche für die zwei Trums (21, 22) der Förderbänder (6, 66), den oberen Trum (21) und den unteren Trum (22), dienen, wobei die Gleitflächen (31, 32) einen U-förmigen Querschnitt haben, dessen Ränder zu der Öffnung des U zulaufen, um ihre Befestigung durch Festklemmen auf den umgebogenen Rändern (11 m 11 v) zu erlauben.

7. Fördervorrichtung nach einem der Ansprüche 1 bis 6, **dadurch gekennzeichnet, dass** das Endmodul (2) von einem Rahmen gebildet wird, dessen Breite im Wesentlichen derjenigen des Förderkorridors entspricht, wobei der Rahmen in seinem mittleren Teil zwei Längswände (45) umfasst, deren Abstand dem der Seitenflächen des benachbarten Grundmoduls (1) entspricht, die Wände (45) auf ihren umgebogenen Rändern (11m, 11v), die an ihren oberen Teilen angeordnet sind, mit Gleitflächen (31m, 31 v) desselben Typs wie diejenigen, die auf den Seitenflächen (10, 10', 10") des Grundmoduls (1) angebracht sind, versehen sind, durch sie die Welle (46) hindurchgeht, die die Trommel (47) für das Umlaufen des Förderbandes (6, 66) trägt, und die Welle zwischen auf den Seitenflächen (42) des Rahmens angeordneten Lagern verläuft.

8. Fördervorrichtung nach Anspruch 7, **dadurch gekennzeichnet, dass** das Endmodul (2v), dessen Trommel (47M) motorisch angetrieben wird, Wände (45) umfasst, die mit oberen umgebogenen Rändern (11v) versehen sind, die Gleitflächen (31v) aufnehmen, die sich nur über einen Teil der Länge der umgebogenen Ränder (11v) derart erstrecken, dass sie das Anbringen der oberen Gleitflächen (31) eines Grundmoduls (1) auf dem freien Teil dieser umgebogenen Ränder (11v) erlauben, wobei die oberen Gleitflächen (31v) des Endmoduls (2y) abgeschrägt in Form einer Biegung enden.

9. Fördervorrichtung nach Anspruch 7, **dadurch gekennzeichnet, dass** das Endmodul (2m), dessen Trommel (47L) frei, nicht motorgetrieben, ist, Gleitflächen (31m) umfasst, die sich ab dem Rahmen des Moduls (2m) über eine Länge von etwa der Breite des Förderbandes (6) derart erstrecken, dass sie das Einfügen dieser oberen Gleitflächen (31m) dieses Endmoduls (2m) an den oberen umgebogenen Rändern (11) der Seitenflächen (10) des benachbarten Grundmoduls (1) erlauben.

10. Fördervorrichtung nach einem der Ansprüche 4 bis 9, **dadurch gekennzeichnet, dass** das Zwischenmodul (3) von einem rechtwinkligen großen Rahmen, der Seitenflächen und Traversen umfasst, gebildet wird, wobei die Traversen die zwei Längswände (55) tragen, deren Abstand demjenigen der Seitenflächen (10, 10', 10") der Grundmodule (1) entspricht, um die Seitenflächen (10, 10', 10") zu verlängern, die Längswände (55) des Zwischenmoduls (3) obere umgebogenen Ränder umfassen, die gleich denjenigen der Wände (45) der Endmodule (2) sind, und diese umgebogenen Ränder Gleitflächen umfassen, die auf der Seite der motorgetriebenen Trommel kürzer als diese umgebogenen Ränder sind, um ein Anbringen der Gleitflächen (31) des benachbarten Grundmoduls (1) an diesen letzteren umgebogenen Rändern zu ermöglichen, während auf der Seite der freien Trommel (46L) die Gleitflächen über den Rahmen des Zwischenmoduls (3) überstehen und sich auf den oberen umgebogenen Rändern des anderen benachbarten Grundmoduls (1) auf einer Länge, die beispielsweise etwa die Breite des Förderbandes (6) beträgt, einfügen.

11. Fördervorrichtung nach einem der Ansprüche 4 bis 10, **dadurch gekennzeichnet, dass** der mittlere Teil des Zwischenmoduls (3), der sich zwischen den Trommeln der Förderbänder (6, 66) der Grundmodule (1) und den ergänzenden Förderbändern (6a), die seitlich angeordnet sind, befindet, ein Zubehörteil vom Typ Stopper (60) umfasst, das es erlaubt, die Kästen (4) zu arretieren, wobei der Stopper (60) von einem Anschlag (62) gebildet wird, der um einen Rahmen (61) in Form eines Bügels gelenkig ist, und der Rahmen (61) eine Verankerung für den Zylinder (64) für die Betätigung des Anschlags (62) umfasst und mit Mitteln versehen ist, um in dem mittleren Zwischenraum des Zwischenmoduls (3) an einer Traverse (54) befestigt zu werden.

12. Fördervorrichtung nach Anspruch 5, **dadurch gekennzeichnet, dass** die Mittel für den Anschluß der Führungsschienen (8) von Stoßlaschen (24) gebildet werden, deren Querschnitt U-förmig ist, um sich außen an die Schienen (8) anzulegen, wobei jede Stoßlasche (24) mit einem Keil verbunden ist, der sich über die Hälfte der Länge der Innenfläche des Bodens (28) des U erstreckt, der Keil es erlaubt, eine seitliche Verschiebung der nachfolgenden Schiene (8v) in Bezug auf die vorhergehende Schiene (8m) zu erzeugen, um jede Unebenheit zu vermeiden, und der Keil in Form eines in diesem U angeordneten umgebogenen Randes vorliegt, der von einer Lasche (27) gebildet wird, die in Verlängerung der einzigen Innenfläche des U angebracht ist und so einen integrierenden Bestandteil dieser Stoßlasche (24) bildet.

13. Fördervorrichtung nach Anspruch 5, **dadurch gekennzeichnet, dass** sie Mittel in Form von Winkeln (38) zum Tragen eines Weges (37) umfasst, der Kabel oder dergleichen aufnehmen kann, wobei die Winkel (38) wie die senkrechten Streben (23) an den Endstücken (15), die als Verbindung der Querstreben (14) des mittleren Kastens dienen, angeordnet und befestigt sind.
